# EUROPÄISCHE PATENTSCHRIFT

(11) **EP 2 188 329 B1**
(45) Veröffentlichungstag und Bekanntmachung des Hinweises auf die Patenterteilung: **16.02.2011**
(21) Anmeldenummer: 08782853.9
(22) Anmeldetag: 12.09.2008
(51) Int. Cl.: C08J 9/00, C08L 25/04

(54) **VERFAHREN ZUR HERSTELLUNG VON EXPANDIERBAREN STYROLPOLYMERISATEN UND DEREN VERWENDUNG**
METHOD FOR PRODUCING EXPANDABLE POLYSTYRENE AND THE USE THEREOF
PROCÉDÉ DE PRODUCTION DE POLYMÉRISATS DE STYRÈNE EXPANSIBLES ET LEUR UTILISATION

(30) Priorität: 14.09.2007 AT 14472007
(43) Veröffentlichungstag der Anmeldung: 26.05.2010
(73) Patentinhaber: Sunpor Kunststoff GmbH, 3100 St. Pölten (AT)
(72) Erfinder: EBERSTALLER, Roman, A-3200 Obergrafendorf (AT); HINTERMEIER, Gerhard, A-3100 St.Pölten (AT)
(74) Vertreter: Wildhack & Jellinek
(86) Internationale Anmeldenummer: PCT/AT2008/000326
(87) Internationale Veröffentlichungsnummer: WO 2009/033200

(56) Entgegenhaltungen:
- EP-A- 0 834 529
- WO-A-03/076505
- DE-A1- 19 636 058
- DE-A1-102004 034 516
- US-A- 2 628 951
- US-A- 4 136 142
- US-A1- 2006 106 122
- DATABASE WPI Week 200622 Thomson Scientific, London, GB; AN 2006-207494 XP002502915 & JP 2006 062274 A (KANEKA CORP) 9. März 2006 (2006-03-09)

## Beschreibung

Die Erfindung bezieht sich auf expandierbare Styrolpolymerisate (EPS), die zu Hartschaumstoffen mit feiner Zellstruktur und geringer Dichte verarbeitbar sind, und auf Styrolpolymerisatextrusionsschaumstoffe (XPS) und insbesondere auf ein neues Verfahren zu deren Herstellung.

Zur Herstellung von expandierbaren Styrolpolymerisaten sind mehrere Verfahren bekannt. Durch Suspensionspolymerisation kann expandierbares Polystyrol durch Polymerisation von Styrol und Begasung mit einem Treibmittel hergestellt werden.

Weiters können expandierbare oder expandierte Styrolpolymerisate mechanisch durch Extrusion von Polymerschmelzen und Einmischung eines Treibmittels in die Polymerschmelze und anschließende Förderung durch eine Düsenplatte zu extrudiertem EPS-Granulat verarbeitet, oder durch Anschäumen direkt nach einer Düse zu geschäumten Platten verarbeitet werden.

Weiters sind Verfahren bekannt, in denen expandierbare Styrolpolymerisate mittels statischer Mischelemente erzeugt werden (EP 0 668 139).

Bei den oben genannten mechanischen Verfahren kommt es infolge der hohen Temperaturen und der starken mechanischen Kräfte beim Schmelzen und Fördern immer zu einem Abbau der Polymerketten. Das Molekulargewicht der extrudierten Styrolpolymerisate liegt in der Regel etwa 10.000 - 15.000 g/mol unterhalb des Molekulargewichts des ursprünglich eingesetzten Polymers. Es ist nun an sich bekannt, dass sich durch Zugabe von Antioxidantien und Stabilisatoren dieser Abbau vermindern lässt.

DE 28 12 350 A beschreibt beispielsweise ein Verfahren zur Extrusion von Polystyrolmassen, denen zur Stabilisierung sterisch gehinderte Phenole sowie Tris(substituiertes Phenol)phosphit zugegeben ist. Dieses Verfahren hat sich bei der Extrusion von nicht flammgeschützten Kristallpolymerisaten und Polystyrol aus der Perlpolymerisation bewährt.

Flammgeschützten Styrolpolymerisaten wird aber normalerweise, zur Unterstützung eines meist halogenierten Flammschutzmittels, ein oder mehrere thermische Radikalbildner wie Dicumyl oder Peroxide als Flammschutzsynergist zugegeben, wie z.B. der Patenschrift EP 0 374 812 B1 zu entnehmen ist. Insbesondere geeignet sind thermische Radikalbildner mit kurzen Halbwertszeiten bei Temperaturen von 140 bis 300°C, wie z.B. Dicumylperoxid, Di-t-butylperoxid oder t.-Butylhydroperoxid.

Besonders aus Peroxiden und thermischen Radikalbildnern entstehende Radikale führen jedoch bei der Verarbeitung - im Zusammenspiel von hoher Temperatur und Scherbeanspruchung - zu einem besonders starken Abbau der Polymerketten. Aus diesem Grund baut flammgeschütztes Polystyrol, das neben dem eigentlichen Flammschutzmittel einen thermischen Radikalbildner als Synergisten enthält, besonders stark ab.

Dieser Abbau lässt sich jedoch durch erhöhte Zugabe von Stabilisatoren oder Antioxidantien vermindern, gleichzeitig werden aber durch die dort enthaltenen Radikalfänger die entstehenden Radikale irreversibel aus dem System entfernt und stehen dann nicht mehr als Flammschutzsynergist zur Verfügung. Dieser Nachteil muss dann wieder durch erhöhte Zugabe von Flammhemmern ausgeglichen werden.

Verzichtet man jedoch ganz auf Synergisten, muss, um die Anforderungen der üblichen Flammtests zu erfüllen, eine bis zu zehnfach höhere Konzentration an Flammschutzmitteln eingesetzt werden.

Gemäß WO 2006/007995 A1, die ein Verfahren zur Herstellung von flammgeschütztem, expandierbarem Polystyrol beschreibt, ist ein Verfahren vorgesehen, bei dem versucht wird, den Kettenabbau durch eine möglicht geringe Verweilzeit von insbesondere weniger als 15 min des Peroxides in der Polymerschmelze gering zu halten. Dies kann z.B. erreicht werden, indem der Synergist nicht mit der Polymerschmelze über die gesamte Extruderlänge gefördert wird, sondern erst innerhalb einer der Endzonen des Extruders zugegeben wird, beispielsweise über Pumpen oder Seitenextruder.

Diese Vorgehensweise bedingt allerdings einen hohen apparativen Aufwand und birgt das Risiko einer letztlich nicht homogenen Einmischung des FlammschutzSynergisten in die Styrol-Polymerschmelze in sich. Ein Abbau durch entstehende Radikale muss dennoch durch Radikalfänger abgeschwächt werden.

Ein weiterer Nachteil besteht darin, dass bereits Peroxide enthaltende Rohstoffe, wie z.B. flammgeschützte Polymerrecyklate oder expandierbare Styrolpolymere, insbesondere flammgeschützte, wie z.B. Randfraktionen aus der Perlpolymerisation, einen derart starken Kettenabbau bewirken, dass diese nicht als Rohstoffe eingesetzt werden können.

Aufgabe der vorliegenden Erfindung war es daher, ein wirtschaftliches und schonendes Verfahren für die Herstellung von flammgeschütztem, ein oder mehrere thermische Radikalbildner als Flammschutz-Synergist enthaltendem, expandierbarem oder expandiertem Polystyrol zu finden, bei dem es zu einer nur geringen Verringerung des Molekulargewichts durch Kettenabbau kommt und der Flammschutzsynergist nicht irreversibel aus dem System entfernt wird.

Überraschenderweise konnte eine Lösung durch den Einsatz zumindest eines stabilen freien Radikals aus der Gruppe der Nitroxyl-Radikale (Nitroxide) der allgemeinen Formel (1) gefunden werden.
Gegenstand der Erfindung ist somit ein neues Verfahren zur Herstellung von expandierbaren Styrolpolymerisaten (EPS) oder Styrolpolymerisatextrusionsschaumstoffen (XPS), ausgehend von schon im polymerisierten Zustand vorliegenden Styrolpolymerisaten oder Styrolpolymerisat-Schmelzen, wobei dieselben mindestens ein Treibmittel und/oder mindestens ein Flamm- bzw. Brandschutzmittel und/oder mindestens einen Radikalbildner als Flammschutzsynergist, entweder von vornherein und/oder während des Herstellungsvorgangs zugesetzt enthalten, dadurch gekennzeichnet, dass - zur Verminderung des Ausmaßes der Verringerung des Molekulargewichts als Folge des Kettenabbaus im Zuge der Erhitzung während des Herstellungsverfahrens - das Styrolpolymerisat und/oder dessen Schmelze mit zumindest einem stabilen freien Radikal aus der Gruppe der organischen Nitroxyl-Radikale der allgemeinen Formel (1) 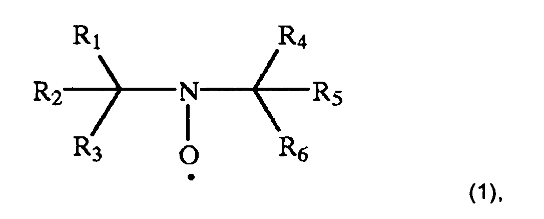 worin jeweils R₁, R₂, R₃, R₄, R₅ und R₆ entweder untereinander gleiche oder verschiedene, lineare oder verzweigte, gegebenenfalls substituierte, Alkylgruppen, bedeuten,
oder aber R₂, R₃, R₅ und R₆ die soeben genannten Bedeutungen haben, jedoch R₁ und R₄ miteinander zu einer Kette geschlossen sind, die aus (-CH₂-)-Einheiten oder aus einer Kombination der (-CH₂-)-Einheiten mit Sauerstoff - und/oder Stickstoffatomen besteht, welche Kette gegebenenfalls mit einem weiteren gesättigten, ungesättigten oder aromatischen Ring verbunden ist, wobei diese weitere ringförmige organische aliphatische und/oder aromatische Struktur gegebenenfalls substituiert ist, oder aber die Kette selbst mindestens einen beliebigen Substituenten trägt,
oder mit mindestens einer ein derartiges Nitroxyl-Radikal der Formel (1) aufweisenden bzw. bildenden Verbindung
versetzt wird.

Eine bevorzugte Ausführungsform des neuen Verfahrens ist im **Anspruch** 2 angegeben.

Besonders bevorzugt ist der Einsatz von Nitroxyl-Radikalen, die der allgemeinen Formel (2) entsprechen, die im **Anspruch** 3 angeführt ist.

Besonders bevorzugte Vertreter dieses Typs, bei denen R₅, R₂, R₃ und R₆ Methylgruppen darstellen, sind 2,2,6,6-Tetramethylpiperidin-N-oxyl (TEMPO) (Y entspricht einem Wasserstoffatom) und 4-Hydroxy-2,2,6,6-tetramethylpiperidin-N-oxyl (HTEMPO) (Y entspricht einer Hydroxylgruppe).

Eine bekannte Anwendung von Nitroxyl-Radikalen findet sich in US 4,581,429 A. Hier ist beschrieben, dass Alkoxamine, also Verbindungen von Nitroxyl-Radikalen mit einem Polymerisationsinitiator für die kontrollierte radikalische Polymerisation von Styrolmonomeren verwendet werden können. Freie radikalische Polymerisationen, die mittels Radikalstarter initiiert werden, laufen in Folge der geringen Stabilität der radikalischen Zwischenprodukte sehr schnell ab. Dabei führen Kettenabbruchs- und Übertragungsreaktionen zu einer breiten Molmassen-Verteilung der dabei entstehenden Polymerketten. Durch die Zugabe von Vertretern der oben beschriebenen Substanzgruppe in die Monomeren ist es möglich, die Wachstumsstufen der Polymerisation zu kontrollieren und auf diese Weise eine möglichst einheitliche Molekulargewichts-Verteilung zu erreichen.

Ein Hinweis auf die Möglichkeit, Styrolpolymerisate erst bei der weiteren Verarbeitung mit Nitroxyl-Radikalen, oder deren Verbindungen zu stabilisieren, ist dieser Patentschrift nicht zu entnehmen.

Zum bestehenden Stand der Technik ist weiters folgendes auszuführen:

Die DE 19939031 A1 behandelt nur die N-Oxylradikale und deren Einsatz für die Bildung von Polymeren aus Monomeren. Diese Verbindungen werden dort zur Kontrolle radikalischer Polymerisationen eingesetzt und sollen in kürzerer Zeit zu höheren Umsätzen führen.

Die Nitroxyl-Radikale gemäß dieser DE-A1 werden zur Erreichung eines gänzlich anderen Zieles eingesetzt, als dies gemäß der Erfindung vorgesehen ist: Die Nitroxyl-Radikale dienen gemäß dieser DE-A1 zum Aufbau bzw. zur Beschleunigung des Aufbaus von Polymerketten, ausgehend von den Monomeren.

Gemäß der Erfindung werden jedoch - geradezu diametral zur Aufgabe und zu dem Ziel der DE-A1 - einem fertigen, also einem fertig polymerisierten Polymer, welches schon mit Polymerketten beachtlicher Länge ausgebildet ist, die - an sich bekannten - Nitroxylradikale zugesetzt, um bei der weiten Verarbeitung unter Druck und bei erhöhter Temperatur, also z.B. in einem Extruder, einem rasch erfolgenden Abbau der Polymerketten, also der raschen Reduktion der Kettenlänge des Polymeren in Folge der Einwirkung der erhöhten Temperatur auf dasselbe effektiv entgegenzuwirken.

Somit hat die genannte DE-A1 keinerlei Relevanz zum erfindungsgemäßen Verfahren gemäß welchem der kettenabbau-verhindernde bzw. -vermindernde Einsatz der Nitroxylradikale in fertigen Polymeren bzw. deren Schmelzen vorgesehen ist.

Auch die DE 19633996 A1 hat in gleicher Weise den Zusatz dieser N-Oxylradikale zu den Monomeren bei der Herstellung von Polymeren aus denselben zum Gegenstand.

Somit kommt auch dieser DE-A1 keine Relevanz für die vorliegende Erfindung zu.

Die DE 102004034516 A1 hat ein Verfahren zur Herstellung von flammgeschützten, expandierbaren Styrolpolymeren (EPS) durch Extrusion einer Treibmittel und Flammschutzmittel enthaltenden Styrolpolymer-Schmelze durch eine Düsenplatte mit anschließender Unterwassergranulation zum Gegenstand, aber es kann dort zu einer Verminderung des Kettenabbaus die gemäß dieser DE-A1 angestrebte kurze Zeit des Schmelzezustands des Polymeren beitragen.

Es ist in dieser DE-A1 an keiner Stelle von einer Zugabe eines Nitroxylradikals die Rede, sondern nur von der Zugabe von Dicumyl und Dicumylperoxid als Flammschutzsynergisten. Daher hat auch diese DE-A1 für die vorliegende Erfindung keine Relevanz.

Gemäß der JP 1165534 A werden Nitroxylradikale als Polymerisations-Inhibitoren für Styrolmonomere eingesetzt, welche z.B. einer Destillation bei erhöhten Temperaturen unterworfen werden.

Die Aufgabe gemäß der Erfindung liegt nicht in der Verhinderung der Polymerisation von Monomeren, sondern in der Verhinderung der zu schnellen Verkürzung der Kettenlänge von fertigen Polymeren bei deren Verarbeitung bei erhöhten Temperaturen. Es kann daher auch in dieser JP-A keine Relevanz für die vorliegende Erfindung gesehen werden.

Schließlich ist auch der SU-1558888 A1 in ähnlicher Weise nur die Funktion der dort beschriebenen zu Monomeren zugesetzten N-Oxylverbindungen als Polymerisations-Inhibitoren zu entnehmen, womit auch durch diese SU-A1 die Erfindung nicht berührt.

Bei der Herstellung der Styrolpolymerisate wird das Treibmittel in die Polymerschmelze eingemischt, oder es ist bei Verwendung von expandierbarem Polystyrol als Rohstoff, das durch Perlpolymerisation hergestellt worden ist, bereits in den Rohstoff eingebunden und kann gegebenenfalls durch Zudosierung von weiterem Treibmittel ergänzt werden.

Im Zusammenhang mit der vorliegenden Erfindung sind unter dem Begriff "Styrolpolymerisate" insbesondere Polystyrole und Mischpolymerisate bzw. Copolymerisate des Styrols mit anderen Verbindungen, wie z. B. alpha-Methylstyrol, Acrylnitril, Maleinsdäureanhydrid, Butadien oder Divinylbenzol, zu verstehen. Weiters sind alle Polymerisate mit üblichen Molekulargewichten einsetzbar.

Das Herstellungsverfahren umfasst die Schmelzeerzeugung, eine Abfolge von Mischen, Heizen oder Kühlen, Fördern und abschließendes Granulieren und/oder Schäumen.

Alle diese Verfahrensstufen sind aus der Kunststoffverarbeitung grundsätzlich an sich schon lange bekannt und können auf bzw. in an sich bekannten Apparaten und Apparatekombinationen durchgeführt werden.

Besonders geeignet hierfür sind Extruder oder statische Mischer mit anschließender Granulierung. Für die Granulierung können beispielsweise Unterwassergranulierung unter Druck, Granulierung mit rotierenden Messern und Kühlung durch Kühlflüssigkeit oder Zerstäubungsgranulation verwendet werden.

Als Treibmittel kommen physikalische Treibmittel, wie beispielsweise gasförmige bzw. bei höheren Temperaturen gasförmig werdende Kohlenwasserstoffe (auch halogeniert bzw. teilhalogeniert) in Frage, die einen Siedepunkt unterhalb des Erweichungspunktes des jeweiligen Polymerisates haben. Typische Vertreter dieser Verbindungen sind Propan, Butan, Pentan und Hexan. Auch Wasser, Stickstoff oder CO₂ sind als Treibmittel verwendbar. Weiters können chemische Treibmittel und Treibmittel, die - thermisch oder strahlungsinduziert - flüchtige Bestandteile abspalten, verwendet werden.

Als Flammschutzmittel kommen insbesondere halogenierte organische Verbindungen mit einem Bromgehalt größer 50 Gew% zum Einsatz. Bekannte Beispiele dafür sind Hexabromcyclododecan oder Pentabrom monochlorcyclohexan. Weiters können sämtliche anderen halogenierten, aber auch halogenfreie Flammschutzmittel eingesetzt werden. Mögliche Vertreter dieser Substanzen sind beispielsweise roter Phosphor, organische Phosphorverbindungen, z. B. DOP (9,10-Dihydro-9-Oxa-10-Phospha-phenanthren-10-oxid), organische und anorganische N-Verbindungen (z.B. Ammoniumpolyphosphat) anorganische Verbindungen, z.B. Magnesiumhydroxid; Aluminiumhydroxid; Wasserglas oder Blähgraphit.

Die Einsatzmenge dieser Flammschutzmittel liegt üblicherweise zwischen 0,1 und 35 Gew.%. Diese Flammschutzmittel können in jeder beliebigen Kombination mit den oben angeführten Flammschutzsynergisten kombiniert werden.

Weiters können in den Polymerschmelzen alle üblichen Hilfsstoffe, wie UVstabilisatoren, Weichmacher, Pigmente, Farbstoffe, organische und anorganische Füllstoffe, Antioxidantien und/oder Säurefänger in beliebigen Mengen eingesetzt werden. Durch Zugabe von athermanen Partikeln, wie z.B. Graphit, Ruß, Metalloxiden, Nichtmetalloxiden oder Aluminiumpulver kann die Wärmeleitfähigkeit der geschäumten Produkte verbessert werden.

Die Zugabe der Nitroxyl-Radikale zu den oder in die fertigen Polymere(n) kann bereits vor dem Aufschmelzen der Polymere mit den restlichen wie oben genannten Komponenten durch Einmischen in dieselben erfolgen und/oder aber erst in einer späteren Stufe der Polymerschmelze durch Hinzufügen innerhalb des Extruders oder Mischers, wie z.B. mittels Pumpen, Seitenextruder oder Stopfwerken. Weiters können die vorgesehenen Nitroxyl-Radikale gleich dem Polymer-Rohstoff zugegeben werden, oder bereits in diesen physikalisch oder chemisch eingebunden sein.

Der **Anspruch** 4 betrifft den Einsatz besonders bevorzugter Nitroxyl-Radikale der Formel (2).

Die **Ansprüche** 5 und 6 beschäftigen sich mit bevorzugt einzusetzenden Masseanteilen der Nitroxyl-Radikale in den neuen Styrolpolymerisaten.

**Anspruch** 7 enthält nähere Angaben zu den vorteilhaft einsetzbaren bzw. eingesetzten Flammschutzmitteln und Flammschutzsynergisten.

Dem **Anspruch** 8 sind vorteilhafterweise einzusetzende Additive zu entnehmen.

Bevorzugt einzusetzende Treibmittel offenbart **Anspruch** 9.

Der **Anspruch** 10 nennt günstigerweise einzubringende Füllstoffe.

**Anspruch** 11 bis 13 betrifft vorteilhafte Verarbeitungsbedingungen bei der Herstellung der neuen, mit Nitroxyl-Radikalen versetzten und auf diese Weise geringem Abbau unterlegenen Styrolpolymerisate.

Schließlich betreffen die **Ansprüche** 14 und 15 bevorzugte Arten der Verwendung der nach dem erfindungsgemäßen Verfahren hergestellten Styrolpolymerisate.

Die folgenden Beispiele erläutern die Erfindung näher. Die erwähnten Prozentangaben beziehen sich auf das Gewicht bzw. auf die Masse des Polymers.

### Beispiel 1:

Ein durch Perlpolymerisation hergestelltes treibmittelhaltiges, flammgeschütztes Styrolpolymer (EPS) mit einem mittleren Molekulargewicht M_{w} von 200.000 g/mol, welches bereits eine Kombination von Hexabromcyclododecan (HBCD) (0,8 Gew-%) und Dicumylperoxid (0,2 Gew-%) enthielt, wurde in einem Extruder aufgeschmolzen.

Dem Styrolpolymer wurden im Einzugsbereich des Extruders weitere 1,2 Gew% HBCD zudosiert. Die Polymerschmelze wurde durch eine Düsenplatte gefördert und mit einem druckbeaufschlagten Unterwassergranulierer zu kompakten EPS-Granulaten granuliert.

### Beispiel 2:

Es wurde wie in Beispiel 1 vorgegangen. Der Rohstoffmischung wurden jedoch im Einzugsbereich des Extruders 0,2% eines handelsüblichen Stabilisators für Kunststoffe (Tris(substituiertes Phenol)phosphit) beigemengt.

### Beispiel 3:

Es wurde wie in Beispiel 1 vorgegangen. Der Rohstoffmischung wurden jedoch, wie gemäß der Erfindung vorgesehen, im Einzugsbereich des Extruders 0,2% 4-Hydroxy-2,2,6,6-tetramethylpiperidin-N-oxyl (HTEMPO) beigemengt.

### Beispiel 4:

Es wurde derselbe Rohstoff wie in Beispiel 1 eingesetzt. Die Extrusionsbedingungen wurden äquivalent zu Beispiel 1 gewählt. Es wurde jedoch kein zusätzliches Flammschutzmittel zugegeben.

### Beispiel 5:

Es wurde wie in Beispiel 1 vorgegangen. Als Rohstoff wurde jedoch ein durch Perlpolymerisation hergestelltes treibmittelhaltiges, nicht flammgeschütztes Styrolpolymer (EPS) mit einem mittleren Molekulargewicht M_{w} von 200.000 g/mol verwendet. Weiters wurde der Mischung im Einzugsbereich 0,2% Dicumylperoxid zugegeben und mit den restlichen Komponenten gemeinsam aufgeschmolzen.

### Beispiel 6:

Es wurde wie in Beispiel 5 vorgegangen Der Rohstoffmischung wurden jedoch, wie gemäß der Erfindung vorgesehen, im Einzugsbereich des Extruders 0,2% 4-Hydroxy-2,2,6,6-tetramethylpiperidin-N-oxyl (HTEMPO) beigemengt.

### Ergebnisse:

| | mittleres Molekulargewicht M_{w} [kg/mol] bzw. [kDa] | Molekulargewichtsabbau [kg/mol] bzw. [kDa] | Brandtest B2 DIN 4102 |
|---|---|---|---|
| Beispiel 1 | 169 | 31 | nicht bestanden |
| Beispiel 2 | 171 | 29 | nicht bestanden |
| Beispiel 3 | 191 | 9 | bestanden |
| Beispiel 4 | 178 | 22 | nicht bestanden |
| Beispiel 5 | 135 | 65 | nicht bestanden |
| Beispiel 6 | 195 | 15 | bestanden |

Die Verkürzungen der Polymerketten bzw. die Verringerung der mittleren Molekulargewichte M_{w} in den Beispielen 1 und 2 sind so stark, dass das die erhaltenen Produkte keineswegs mehr den thermischen und mechanischen Stabilitätsanforderungen entsprechen. Die daraus gefertigten Formteile bestehen den Brandtest nach DIN 4102 nicht.

Im Beispiel 3 liegt der Kettenabbau mit 9.000 g/mol in einem Bereich, der mit dem üblicherweise stattfindenden Abbau von Polymerketten vergleichbar ist. Die während des Extrudierens gebildeten Radikale können durch das HTEMPO so weit gebunden werden, dass diese nicht mehr imstande waren, die Ketten-Abbaureaktionen zu beschleunigen, sind aber als Flammschutzsynergist verfügbar. Die daraus gefertigten Formteile bestehen den Brandtest nach DIN 4102.

In Beispiel 4 wird das Flammschutzsystem aus Flammschutz und Synergist so weit geschwächt, dass der Brandtest nach DIN 4102 nicht bestanden wird. Weiters bewirkt das als Synergist vorhandene Dicumylperoxid einen deutlichen Abbau der Polymerketten.

In Beispiel 5 findet der größte Abbau statt. Das Flammschutzsystem reicht nicht mehr aus um den Brandtest zu bestehen.

In Beispiel 6 ist der Abbau der Kettenlänge vergleichsweise gering. Die Anforderungen des Brandtests werden erfüllt.

## Patentansprüche

1. Verfahren zur Herstellung von expandierbaren Styrolpolymerisaten (EPS) oder Styrolpolymerisatextrusionsschaumstoffen (XPS), ausgehend von schon im polymerisierten Zustand vorliegenden Styrolpolymerisaten oder Styrolpolymerisat-Schmelzen, wobei dieselben mindestens ein Treibmittel und/oder mindestens ein Flamm- bzw. Brandschutzmittel und/oder mindestens einen Radikalbildner als Flammschutzsynergist, entweder von vornherein und/oder während des Herstellungsvorgangs zugesetzt enthalten, **dadurch gekennzeichnet, dass**
- zur Verminderung des Ausmaßes der Verringerung des Molekulargewichts als Folge des Kettenabbaus im Zuge der Erhitzung während des Herstellungsverfahrens das Styrolpolymerisat und/oder dessen Schmelze mit zumindest einem stabilen freien Radikal aus der Gruppe der organischen Nitroxyl-Radikale der allgemeinen Formel (1) 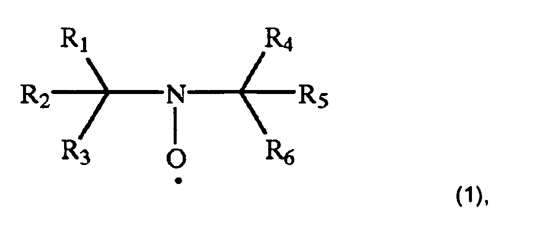
worin jeweils R₁, R₂, R₃, R₄, R₅ und R₆ entweder untereinander gleiche oder verschiedene, lineare oder verzweigte, gegebenenfalls substituierte, Alkylgruppen, bedeuten,
oder aber R₂, R₃, R₅ und R₆ die soeben genannten Bedeutungen haben, jedoch R₁ und R₄ miteinander zu einer Kette geschlossen sind, die aus (-CH₂-)-Einheiten oder aus einer Kombination der (-CH₂-)-Einheiten mit Sauerstoff - und/oder Stickstoffatomen besteht, welche Kette gegebenenfalls mit einem weiteren gesättigten, ungesättigten oder aromatischen Ring verbunden ist, wobei diese weitere ringförmige organische (aliphatische) und/oder aromatische Struktur gegebenenfalls substituiert ist, oder aber die Kette selbst mindestens einen beliebigen Substituenten trägt,
oder mit mindestens einer ein derartiges Nitroxyl-Radikal der Formel (1) aufweisenden bzw. bildenden Verbindung versetzt wird.

2. Verfahren nach Anspruch 1, **dadurch gekennzeichnet, dass** das Styrolpolymerisat und/oder dessen Schmelze mit zumindest einem stabilen freien Radikal aus der Gruppe der organischen Nitroxyl-Radikale der allgemeinen Formel (1), worin jeweils R₁, R₂, R₃, R₄, R₅ und R₆ entweder untereinander gleiche oder verschiedene, lineare oder verzweigte, gegebenenfalls substituierte, Alkylgruppen, bedeuten,
oder aber R₂, R₃, R₅ und R₆ die soeben genannten Bedeutungen haben, jedoch R₁ und R₄ miteinander zu einer Kette geschlossen sind, die aus 3 oder 4 (-CH₂-)-Einheiten oder aus einer Kombination der (-CH₂-)-Einheiten mit Sauerstoff - und/oder Stickstoffatomen besteht, welche Kette gegebenenfalls mit einem weiteren gesättigten, ungesättigten oder aromatischen Ring verbunden ist, wobei diese weitere ringförmige organische (aliphatische) und/oder aromatische Struktur gegebenenfalls substituiert ist, oder aber die Kette selbst mindestens einen beliebigen Substituenten trägt,
oder mit mindestens einer ein derartiges Nitroxyl-Radikal der Formel (1) aufweisenden bzw. bildenden Verbindung
versetzt wird.

3. Verfahren nach Anspruch 1 oder 2, **dadurch gekennzeichnet, dass** ein Nitroxyl-Radikal, das der allgemeinen Formel (2) 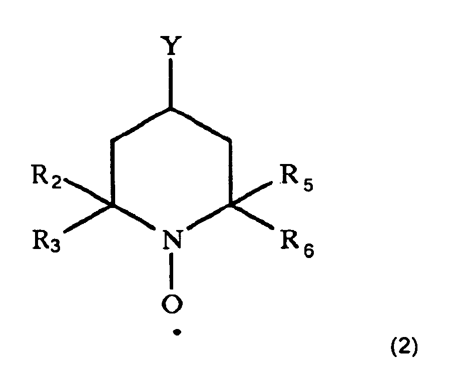 entspricht, worin R₂, R₃, R₅ und R₆ jeweils die im Anspruch 1 genannten Bedeutungen haben und Y einen beliebigen Substituenten darstellt, eingesetzt wird.

4. Verfahren nach einem der Ansprüche 1 bis 3, **dadurch gekennzeichnet, dass** ein Nitroxyl-Radikal eingesetzt wird, das der allgemeinen Formel (2) entspricht, in welcher R₂, R₃, R₅ und R₆ Methylgruppen und Y einen beliebigen Substituenten darstellen.

5. Verfahren nach einem der Ansprüche 1 bis 4, **dadurch gekennzeichnet, dass** das Nitroxyl-Radikal der allgemeinen Formeln 1 und/oder 2 in einer Menge von 0,01 bis 10 Gew.-%, insbesondere von 0,02 bis 2 Gew.-%, jeweils bezogen auf die Masse des Styrolpolymerisates, eingesetzt wird.

6. Verfahren nach einem der Ansprüche 1 bis 5, **dadurch gekennzeichnet, dass** die Styrolpolymerisatschmelze 0,01 bis 10 Gew-%, insbesondere 0,02 bis 2 Gew-%, mindestens eines Nitroxyl-Radikals der allgemeinen Formel (1) entweder von vornherein enthält, und/oder dass das Nitroxyl-Radikal in dieser Menge derselben zuzugeben bzw. in dieselbe eingemischt wird.

7. Verfahren nach einem der Ansprüche 1 bis 6, **dadurch gekennzeichnet, dass** die Styrolpolymerisatschmelze ein Flammschutzmittel, vorzugsweise in einer Menge von 0,1 bis 10 Gew.-%, enthält und/oder dass in der Styrolpolymerisatschmelze als Flammschutzmittel eine organische Halogenverbindung, vorzugsweise mit einem Halogengehalt von mindestens 50 Gew.-%, eingesetzt wird und/oder dass in der Styrolpolymerisatschmelze als Flammschutzmittel ein halogenfreies Flammschutzmittel eingesetzt wird und/oder dass in der Styrolpolymerisatschmelze zumindest ein thermischer Radikalbildner als Flammschutzsynergist eingesetzt wird und/oder dass als thermischer Radikalbildner ein organisches Peroxid, insbesondere Dicumylperoxid oder Di(-2-(tert-butyperoxy)prop-2-yl)benzol, eingesetzt wird.

8. Verfahren nach einem der Ansprüche 1 bis 7, **dadurch gekennzeichnet, dass** in die Styrolpolymerisatschmelze infrarotstrahlendämmende bzw. die Wärmedämmeigenschaften erhöhende Materialien, wie insbesondere Graphit, Ruß oder Aluminium, eingearbeitet werden.

9. Verfahren nach einem der Ansprüche 1 bis 8, **dadurch gekennzeichnet, dass** in die Styrolpolymerisatschmelze ein physikalisches Treibmittel eingebracht wird, bzw. dass ein Styrolpolymerisat oder eine Styrolpolymerisatschmelze eingesetzt wird, in welches bzw. welche ein derartiges Treibmittel schon eingebracht ist und/oder dass in die Styrolpolymerisatschmelze als Treibmittel ein gasförmiger oder flüssiger Kohlenwasserstoff eingebracht wird, bzw. dass ein Styrolpolymerisat oder eine Styrolpolymerisatschmelze eingesetzt wird, in welches bzw. welche ein derartiges Treibmittel schon eingebracht ist und/oder dass in die Styrolpolymerisatschmelze als Treibmittel ein halogenierter oder teilhalogenierter Kohlenwasserstoff eingebracht wird, bzw. dass ein Styrolpolymerisat oder eine Styrolpolymerisatschmelze eingesetzt wird, in welches bzw. welche ein derartiges Treibmittel schon eingebracht ist und/oder dass in das Styrolpolymerisat oder in die Styrolpolymerisatschmelze chemische Treibmittel oder Treibmittel, die thermisch-, oder strahlungsinduziert flüchtige Bestandteile abspalten, eingebracht werden.

10. Verfahren nach einem der Ansprüche 1 bis 9, **dadurch gekennzeichnet, dass** in das Styrolpolymerisat oder in die Styrolpolymerisatschmelze organische und/oder anorganische Füllstoffe eingebracht werden.

11. Verfahren nach einem der Ansprüche 1 bis 10, **dadurch gekennzeichnet, dass** die Styrolpolymerisatschmelze auf eine Massetemperatur zwischen 130 und 250°C gebracht wird.

12. Verfahren nach einem der Ansprüche 1 bis 11, **dadurch gekennzeichnet, dass** eine homogene Verteilung des Nitroxyl-Radikals der allgemeinen Formel (1) bzw. (2) in der Styrolpolymerisatschmelze im Extruder oder in einem statischen Mischer vorgenommen wird.

13. Verfahren nach einem der Ansprüche 1 bis 12, **dadurch gekennzeichnet, dass** im Zuge der Herstellung von Granulaten aus den mit den Additiven einschließlich der Flammschutzmittel und der Nitroxyl-Radikale der allgemeinen Formel (1) bzw. (2) versetzten expandierbaren Styrolpolymerisaten (EPS) eine Granulierung derselben mittels Unterwassergranulation erfolgt.

14. Verwendung der gemäß einem der Verfahren nach einem der Ansprüche 1 bis 13 hergestellten, in als Granulate vorliegenden, expandierbaren Styrolpolymerisate (EPS) zur Herstellung von Polystyrol-Partikelschaumstoffen und Gegenständen oder Objekten daraus, welche eine Dichte von 5 bis 80 kg/m³ aufweisen.

15. Verwendung der gemäß einem der Verfahren nach einem der Ansprüche 1 bis 13 hergestellten, in Form von Granulaten vorliegenden Styrolpolymerisatextrusionsschaumstoffen (XPS) zur Herstellung von Gegenständen oder Objekten daraus, welche eine Dichte von 10 bis 120 kg/m³ aufweisen.

## Claims

1. A method for producing expandable polystyrene (EPS) or extrusion foam material of a styrene polymer (XPS) starting from styrene polymers or styrene polymer melts already present in polymerised condition, wherein the same contain at least one foaming agent and/or at least one flame or fire protection agent and/or at least one radical generating agent as a flame protection synergist either a priori and/or added during the production procedure, **characterised in that**
- for diminishing the extent of the reduction of molecular weight as a consequence of chain degradation in the course of heating during the production procedure, the styrene polymer and/or its melt is mixed with at least one stable free radical of the group of the organic nitroxyl radicals of the general formula (1) 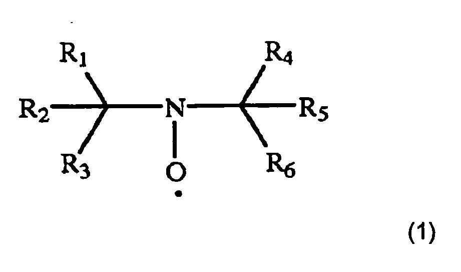
wherein R₁, R₂, R₃, R₄, R₅ and R₆ signify each alkyl groups, which are either mutually identical or different, linear or branched, optionally substituted,
or R₂, R₃, R₅ and R₆ have the said significations, but R₁ and R₄ are closed together to form a chain, which consists of (-CH₂-) units or of a combination of the (-CH₂-) units with oxygen and/or nitrogen atoms, said chain being optionally connected to a further saturated, unsaturated or aromatic ring, wherein this further annular organic (aliphatic) and/or aromatic structure is optionally substituted, or the chain itself carries at least one substituent of any kind,
or is mixed with at least one compound which comprises or generates such a nitroxyl radical of the formula (1).

2. Method according to claim 1, **characterised in that** the styrene polymer and/or its melt is provided with at least one stable free radical of the group of the organic nitroxyl radicals of the general formula (1), wherein R₁, R₂, R₃, R₄, R₅ and R₆ signify alkyl groups, which are either mutually identical or different, linear or branched, optionally substituted,
or R₂, R₃, R₅ and R₆ have the said significations, but R₁ and R₄ are closed together to form a chain, which consists of 3 or 4 (-CH₂-) units or of a combination of the (-CH₂-) units with oxygen and/or nitrogen atoms, said chain being optionally connected to a further saturated, unsaturated or aromatic ring, wherein this further annular organic (aliphatic) and/or aromatic structure is optionally substituted, or the chain itself carries at least one substituent of any kind,
or is mixed with at least one compound which comprises or generates such a nitroxyl radical of the formula (1).

3. Method according to claim 1 or 2, **characterised in that** a nitroxyl radical is used, which corresponds to the general formula (2) 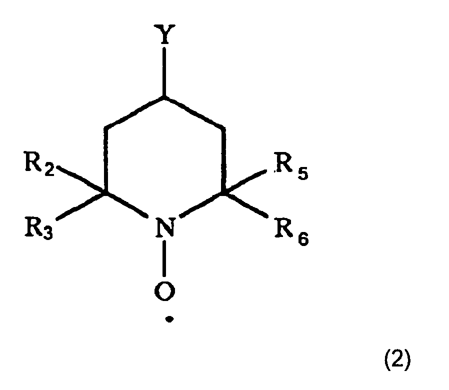 wherein R₂, R₃, R₅ and R₆ each have the significations mentioned in claim 1, and Y represents a substituent of any kind.

4. Method according to any of claims 1 to 3, **characterised in that** a nitroxyl radical is used that corresponds to the general formula (2), in which R₂, R₃, R₅ and R₆ represent methyl groups and Y a substituent of any kind.

5. Method according to any of claims 1 to 4, **characterised in that** the nitroxyl radical of the general formulas 1 and/or 2 is used in an amount of 0.01 to 10 % by weight, particularly of 0.02 to 2 % by weight, referring respectively to the mass of styrene polymer.

6. Method according to any of claims 1 to 5, **characterised in that** the styrene polymer melt contains 0.01 to 10 % by weight, particularly of 0.02 to 2 % by weight, of at least one nitroxyl radical of the general formula (1) either a priori and/or that such an amount of the nitroxyl radical is added to it or is mixed into it.

7. Method according to any of claims 1 to 6, **characterised in that** the styrene polymer melt contains a flame protection agent, preferably in an amount of 0.1 to 10 % by weight, and/or that an organic halogen compound is used in the styrene polymer melt as a flame protection agent, preferably with a halogen contents of at least 50 % by weight, and/or a halogen-free flame protection agent is used in the styrene polymer melt as a flame protection agent, and/or that at least one thermal radical generator is used in the styrene polymer melt as a flame protection synergist, and/or that an organic peroxide, particularly dicumyl peroxide or Di(-2-(tert-butyperoxy)prop-2-yl)benzene, is used as a thermal radical generator.

8. Method according to any of claims 1 to 7, **characterised in that** infrared rays isolating or heat insulation properties increasing materials, such as particularly graphite, carbon black or aluminium, are incorporated into the styrene polymer melt.

9. Method according to any of claims 1 to 8, **characterised in that** a physical foaming agent is introduced into the styrene polymer melt, or that a styrene polymer or a styrene polymer melt is used, wherein such a foaming agent is already incorporated, and/or that a gaseous or liquid hydrocarbon is introduced into the styrene polymer melt as a foaming agent, or that a styrene polymer or a styrene polymer melt is used, wherein such a foaming agent is already incorporated, and/or that a halogeneted or partially halogenated hydrocarbon is introduced into the styrene polymer melt as a foaming agent, or that a styrene polymer or a styrene polymer melt is used, wherein such a foaming agent is already incorporated, and/or that chemical foaming agents or foaming agents, which hydrolyse volatile components by thermal or ray induction introduced into the styrene polymer or the styrene polymer melt.

10. Method according to any of claims 1 to 9, **characterised in that** organic and/or inorganic fillers are introduced into the styrene polymer or the styrene polymer melt.

11. Method according to any of claims 1 to 10, **characterised in that** the styrene polymer melt is brought up to a mass temperature of between 130 and 250°C.

12. Method according to any of claims 1 to 11, **characterised in that** a homogeneous distribution of the nitroxyl radical of the general formula (1) and/or (2) in the styrene polymer melt is effected in an extruder or in a static mixer.

13. Method according to any of claims 1 to 12, **characterised in that** in the course of production of granules from the expandable styrene polymers (EPS) mixed with the additives including the flame protection agents and the nitroxyl radical of the general formula (1) and/or (2), granulation is effected by underwater granulation.

14. The use of the expandable styrene polymers (EPS), produced according to any of claims 1 to 13 and existent as granules, for producing polystyrene particle foam materials and articles or objects from them, which have a density of 5 to 80 kg/m³.

15. The use of the styrene polymer extrusion foam materials (XPS), produced according to any of claims 1 to 13 and existent as granules, for producing articles or objects from them, which have a density of 10 to 120 kg/m³.

## Revendications

1. Procédé de production de polymérisats de styrène expansibles (EPS) ou des produits alvéolaires à boudiner d'un polymérisat de styrène (XPS) à partir des polymérisats de styrène ou des fontes de polymérisat de styrène déjà présents en condition polymérisée, dans lequel ceux-ci contiennent au moins un produit moussant et/ou au moins un agent pare-flammes ou coup-feu et/ou au moins un agent formant des radicaux comme synergiste pare-flamme, ou de prime d'abord et/ou ajoutés pendant le procédé de production, **caractérisé en ce, que**
- pour réduire le dégrée de la diminution du poids molaire comme conséquence de la dégradation de chaînes en cours du chauffage pendant le procédé de production, le polymérisat de styrène et/ou la fonte de ceci ayant avec au moins un radical libre stable de la groupe des radicaux organiques de nitroxyl de la formule générale (1) 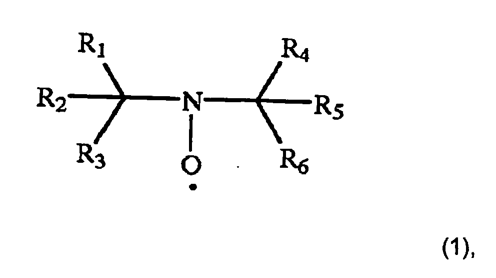
dans laquelle R₁, R₂, R₃, R₄, R₅ et R₆ signifient des groupes alkyl, soit égaux, soit différentes, linéaires ou ramifiées, le cas échéant substituées,
ou bien R₂, R₃, R₅ et R₆ ont la signification mentionnée tout à l'heure, mais R₁ et R4 sont fermé l'un avec l'autre à former une chaîne, qui consiste des unités (-CH₂-) ou d'une combinaison des unités (-CH₂-) avec des atomes d'oxygène et/ou d'azote, ladite chaîne, le cas échéant, étant reliée avec un autre composé cyclique saturé, non saturé ou aromatique, dans lequel cette autre structure cyclique organique (aliphatique) et/ou aromatique, le cas échéant, est substituée, ou bien la chaîne elle même porte au moins un substituant quelconque,
ou est mélangé avec au moins un composé, qui comprend ou forme un tel radical de nitroxyl de la formule (1).

2. Procédé selon la revendication 1, **caractérisé en ce, que** le polymérisat de styrène et/ou la fonte duquel comprend au moins un radical libre stable de la groupe des radicaux organiques de nitroxyl de la formule générale (1) dans laquelle R₁, R₂, R₃, R₄, R₅ et R₆ signifient des groupes alkyl, soit égaux, soit différentes, linéaires ou ramifiées, le cas échéant substituées,
ou bien R₂, R₃, R₅ et R₆ ont la signification mentionnée tout à l'heure, mais R₁ et R₄ sont fermé l'un avec l'autre à former une chaîne, qui consiste de 3 ou 4 unités (-CH₂-) ou d'une combinaison des unités (-CH₂-) avec des atomes d'oxygène et/ou d'azote, ladite chaîne, le cas échéant, étant reliée avec un autre composé cyclique saturé, non saturé ou aromatique, dans lequel cette autre structure cyclique organique (aliphatique) et/ou aromatique, le cas échéant, est substituée, ou bien la chaîne elle même porte au moins un substituant quelconque,
ou est mélangé avec au moins un composé, qui comprend ou forme un tel radical de nitroxyl de la formule (1).

3. Procédé selon la revendication 1 ou 2, **caractérisé en ce, que** l'on utilise un radical de nitroxyl, qui correspond à la formule générale (2) 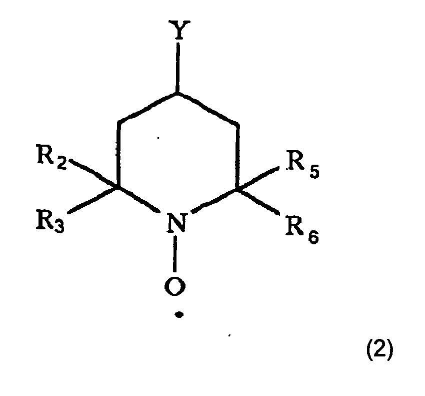 dans laquelle R₂, R₃, R₅ et R₆ ont respectivement les significations mentionnées dans la revendication 1, et Y représente un substituant quelconque.

4. Procédé selon une quelconque des revendications 1 à 3, **caractérisé en ce, que** l'on utilise un radical de nitroxyl, qui correspond à la formule générale (2), dans laquelle R₂, R₃, R₅ et R₆ représentent des groupes méthyles et Y représente un substituant quelconque.

5. Procédé selon une quelconque des revendications 1 à 4, **caractérisé en ce, que** l'on utilise un radical de nitroxyl des formules générales 1 et/ou 2 en une quantité de 0,01 à 10 % en poids, particulièrement de 0,2 à 2 % en poids, en rapport à la masse du polymérisat de styrène.

6. Procédé selon une quelconque des revendications 1 à 5, **caractérisé en ce, que** la fonte du polymérisat de styrène contient 0,01 à 10 % en poids, particulièrement 0,02 à 2 % en poids, d'au moins un radical de nitroxyl de la formule générale (1) ou de prime d'abord et/ou cette quantité du radical de nitroxyl est ajoutée à elle ou est mélangée dans celle-ci.

7. Procédé selon une quelconque des revendications 1 à 6, **caractérisé en ce, que** la fonte du polymérisat de styrène contient un agent pare-flammes, préférablement à une quantité de 0,1 à 10 % en poids et/ou qu'un composé organique de halogène, de préférence avec un contenu d'halogène d'au moins 50 % en poids, est utilisé comme un agent pare-flammes dans la fonte du polymérisat de styrène et/ou que l'on utilise un agent pare-flammes sans un halogène comme agent pare-flammes dans la fonte du polymérisat de styrène et/ou que l'on utilise au moins un agent thermique formant des radicaux comme synergiste pare-flamme dans la fonte du polymérisat de styrène et/ou que l'on utilise un peroxide organique, particulièrement le peroxyde de dicumyle ou Di(-2-(tert-buty-peroxy)prop-2-yl)benzène, comme un agent thermique formant des radicaux.

8. Procédé selon une quelconque des revendications 1 à 7, **caractérisé en ce, que** l'on enfonce des matériaux, qui isolent contre les rayon infrarouge ou augmentent les propriétés d'isolation thermique, dans la fonte du polymérisat de styrène, particulièrement du graphite, de la suie ou d'aluminium.

9. Procédé selon une quelconque des revendications 1 à 8, **caractérisé en ce, qu'**un produit moussant physique et introduit dans la fonte du polymérisat de styrène, ou que l'on utilise un polymérisat de styrène ou une fonte du polymérisat de styrène, où un tel produit moussant a été déjà introduit et/ou qu'un hydrocarbure gazeux ou liquide est introduit comme produit moussant dans la fonte du polymérisat de styrène, ou que l'on utilise un polymérisat de styrène ou une fonte du polymérisat de styrène, où un tel produit moussant a été déjà introduit et/ou qu'un hydrocarbure halogéné ou partiellement halogéné est introduit dans la fonte du polymérisat de styrène, ou que l'on utilise un polymérisat de styrène ou une fonte du polymérisat de styrène, où un tel produit moussant a été déjà introduit et/ou que des produits moussants chimiques ou des produits moussant sont introduits dans le polymérisat de styrène ou dans la fonte du polymérisat de styrène, qui séparent des composants volatils thermiquement ou par induction par des rayons.

10. Procédé selon une quelconque des revendications 1 à 9, **caractérisé en ce, que** des charges organiques et/ou inorganiques sont introduits dans le polymérisat de styrène ou dans la fonte du polymérisat de styrène.

11. Procédé selon une quelconque des revendications 1 à 10, **caractérisé en ce, que** la fonte du polymérisat de styrène est amenée à une température de masse entre 130 et 250°C.

12. Procédé selon une quelconque des revendications 1 à 11, **caractérisé en ce, que** l'on effectue une distribution homogène du radical de nitroxyl de la formule générale (1) et/ou (2) dans la fonte du polymérisat de styrène dans une boudineuse ou dans un mélangeur statique.

13. Procédé selon une quelconque des revendications 1 à 12, **caractérisé en ce, qu'**en cours de la production des granulés à partir des polymérisats de styrène expansibles (EPS), mélangés avec les additifs incluant l'agent pare-flammes et le radical de nitroxyl de la formule générale (1) et/ou (2), la granulation de ceux-ci est réalisée au moyens d'une granulation sous l'eau.

14. L'utilisation des polymérisats de styrène expansibles (EPS), produits par un procédé selon une quelconque des revendications 1 à 13 et disponibles comme des granulés, pour en fabriquer des produits alvéolaires de polystyrène à particules et des articles ou objets, qui présentent une masse volumique de 5 à 80 kg/m³.

15. L'utilisation des produits alvéolaires à boudiner polymérisats de styrène (XPS) produits par un procédé selon une quelconque des revendications 1 à 13 et disponibles comme des granulés pour en fabriquer des articles ou objets, qui présentent une masse volumique de 10 à 120 kg/m³.
